# DEMANDE DE BREVET EUROPEEN

(11) **EP 1 598 290 A1**
(43) Date de publication de la demande: **23.11.2005**
(21) Numéro de dépôt: 05290780.5
(22) Date de dépôt: 07.04.2005
(51) Int. Cl.: B65F 1/14, G01F 23/296

(54) **Dispositif d'indication à distance et autonome du taux de remplissage des conteneurs à déchêts ménagers**

(30) Priorité: 08.04.2004 FR 0403896
(71) Demandeur: Boucher Bernard, 81000 Albi (FR)
(72) Inventeur: Boucher Bernard, 81000 Albi (FR)

(57) **Abrégé**

Dispositif d'indication à distance et autonome du taux de remplissage des conteneurs à déchets ménagers.

La présente invention concerne un dispositif permettant de contrôler le taux de remplissage et d'envoyer un message au collecteur.

Il est constitué d'un boîtier 2 fixé à l'intérieur du conteneur 1.

Un horodateur 6 active une fois par jour le système. Les capteurs ultrasoniques 7A et 7B font une mesure qui est transmise à la carte électronique 4 qui en fonction du taux de remplissage active ou pas le modem 5 qui dans le cas ou le taux de remplissage est supérieur à 50% envoie sur un numéro de téléphone en mémoire dans la puce de la carte SIM 8 un message sous la forme d'un SSM ou sous la forme d'un MMS via INTERNET.

Un test de contrôle hebdomadaire ainsi qu'un message lorsque la batterie 3 est faible sont programmés dans le système.

Le dispositif selon l'invention est particulièrement destiné à la collecte des conteneurs à déchets ménagers.

## Description

La présente invention concerne un dispositif d'indication à distance et autonome du taux de remplissage des conteneurs à déchets ménagers.

Actuellement, les sociétés de collecte des déchets ménagers ont des tournées de collectes des conteneurs d'apport volontaire programmées à date fixe sans tenir compte du remplissage réel de ceux-ci.

Il existe sur le marché des systèmes à gestion avec transmission de données par émission et réception VHF/UHF ainsi que des systèmes avec des flashs de couleur actionnés à distance du camion de collecte par une télécommande.

Le dispositif, selon l'invention, permet d'optimiser la tournée de collecte des conteneurs à déchets ménagers en fonction du taux de remplissage de ceux-ci. Il comporte en effet selon une première caractéristique un boîtier 2 fixé à l'intérieur en partie haute du conteneur 1.

Les dimensions extérieures du boîtier 2 sont calculées pour que le montage de celui-ci se fasse sur place par l'opercule de remplissage sans rapatriement du conteneur en usine.

A l'intérieur du boîtier 2, une batterie 3 alimente un ensemble composé d'une carte électronique 4, d'un modem 5, d'un horodateur 6 et de capteurs ultrasoniques (émetteur 7A et récepteur 7B).

Le processus de fonctionnement se déroule comme suit.

L'ensemble est en veille et ne consomme quasiment pas d'énergie.

L'horodateur 6 est programmé pour activer l'ensemble du système une fois par jour a une heure préréglée.

A cette heure préréglée, l'ensemble est activé pour que les capteurs ultrasoniques 7A et 7B fassent une mesure du taux de remplissage du conteneur 1.

L'émetteur 7a envoie une impulsion ultrasonique au-dessus des déchets et en fonction du temps nécessaire à l'écho pour revenir sur le récepteur 7B, la carte électronique 4 calcule la distance entre les capteurs et les déchets connaissant la vitesse de propagation du son dans l'air.

Selon le seuil préréglé, généralement à 50% du remplissage, deux situations se présentent.

### Première situation.

Le taux de remplissage du conteneur 1 est égal ou inférieur à 50%

Le système se remet en veille jusqu'à la prochaine mesure.

### Deuxième situation.

Le taux de remplissage du conteneur 1 est supérieur à 50%.

La carte électronique 4 envoie au modem 5 l'information. Celui-ci envoie un message téléphonique sur un premier numéro mémorisé dans la puce de la carte SIM 8.

Ce message peut-être sous la forme d'un SMS indiquant que le conteneur est à vider ou sous la forme d'un MMS via le réseau INTERNET afin qu'il puisse être analysé sur un logiciel d'optimisation de tournée de collecte.

Tant que le conteneur ne sera pas vidé, le processus se répétera.

Afin de vérifier le bon fonctionnement, l'horodateur 6 est programmé pour activer le système une fois par semaine pour un test de contrôle.

Dans ce cas, quel que soit le taux de remplissage du conteneur 1, le modem 5 enverra sur un deuxième numéro de téléphone mémorisé dans la puce de la carte SIM 8 un SMS ou un MMS pour attester du bon fonctionnement de l'installation. D'autre part, la chute de tension de la batterie 3 (charge faible) déclenchera au travers du modem 5 sur le même numéro que celui du contrôle de fonctionnement un message sous la forme d'un SMS ou d'un MMS indiquant de recharger la batterie 3.

L'optimisation de la tournée de collecte se fait de la façon suivante.

La position GPS de chaque conteneur 1 est mémorisée dans le logiciel de traitement de l'information sur la cartographie de la zone d'implantation de ceux-ci.

Un symbole situe sur la carte la position de chaque conteneur avec sa référence.

Lors de la connexion sur le site, le collecteur voit apparaître à l'écran en vert les symboles des conteneurs qui ne sont pas à vider et en rouge ceux qui sont pleins.

L'impression sur papier de cette cartographie permet d'optimiser le tournée de collecte.

Compte-tenu des variations saisonnières du remplissage des conteneurs, le taux de remplissage préréglé pour l'envoi des messages est modifiable à distance sur le site.

Le dispositif, selon l'invention, est particulièrement destiné à la collecte des conteneurs à déchets ménagers.

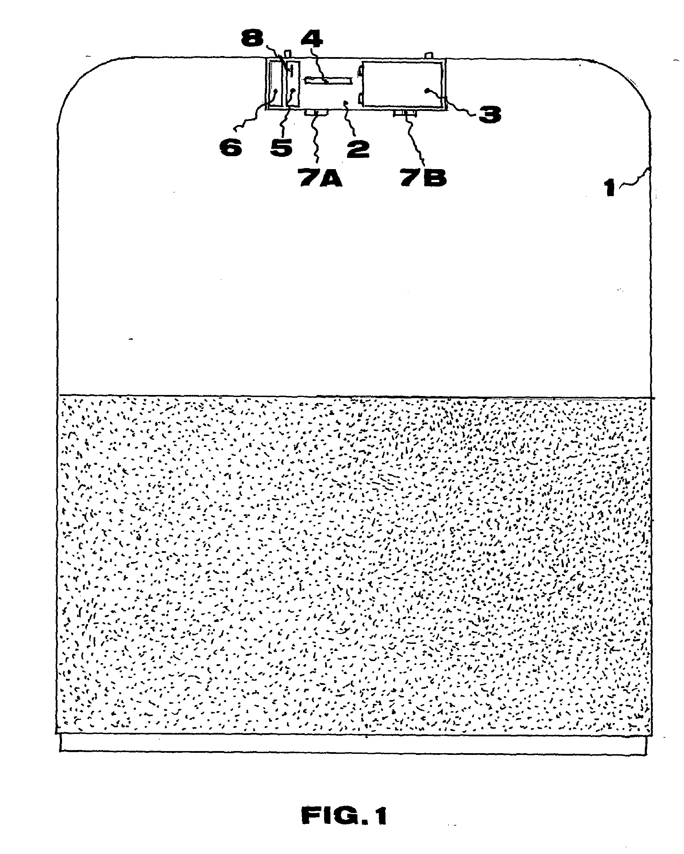

## Revendications

1. Dispositif d'indication à distance et autonome du taux de remplissage des conteneurs à déchets ménagers **caractérisé en ce qu'**il comporte un boîtier 2 fixé à l'intérieur en partie haute du conteneur 1. Le boîtier 2 intégrant une batterie d'alimentation électrique 3, une carte électronique 4, un modem 5 avec une carte SIM 8, un horodateur 6 et un système de mesure ultrasonique du taux de remplissage muni d'un émetteur 7A et d'un récepteur 7B.

2. Dispositif selon la revendication 1 **caractérisé en ce que** l'horodateur 6 est programmé pour activer l'ensemble du système une fois par jour à une heure préréglée pour déclencher une mesure de distance entre l'émetteur 7a et le dessus des déchets ménagers dans le conteneur 1, la réception de l'impulsion ultrasonique par le récepteur 7B étant envoyée à la carte électronique 4 pour calculer la distance entre le dessus des déchets ménagers et la position des capteurs 7A et 7B en fonction de la vitesse de propagation du son dans l 'air.

3. Dispositif selon les revendications 1 et 2 **caractérisé en ce que** si la mesure effectuée par les capteurs ultrasoniques 7A et 7B entraîne au travers de la carte électronique 4 un calcul du taux de remplissage inférieur à 50%, le système se remet en veille.

4. Dispositif selon les revendications 1 et 2 **caractérisé en ce que** si la mesure effectuée par les capteurs ultrasoniques 7A et 7b entraîne au travers de la carte électronique 4 un calcul du taux de remplissage supérieur à 50%, le modem 5 envoie un message téléphonique sur un premier numéro mémorisé dans la puce de la carte SIM 8.

5. Dispositif selon la revendication 1 **caractérisé en ce que** l'horodateur 6 est programmé pour activer une fois par semaine le système pour envoyer quel que soit le taux de remplissage, sur un deuxième numéro de téléphone en mémoire dans la puce de la carte SIM 8 un message de contrôle du bon fonctionnement du système.

6. Dispositif selon la revendication 1 **caractérisé en ce que** la carte électronique 4 analyse à chaque mesure l'état de charge de la batterie 3 et que lorsque celle-ci est faible, le modem 5 envoie un message sur le deuxième numéro de téléphone en mémoire dans la puce de la carte SIM 8.

7. Dispositif selon la revendication 4 **caractérisé en ce que** le message envoyé lorsqu'un conteneur est plein fait passer le symbole de celui-ci du vert au rouge sur la cartographie du site d'implantation dont sa position GPS a été initialement mémorisée.

8. Dispositif selon les revendications 3 et 4 **caractérisé en ce que** le taux de remplissage préréglé pour l'envoi des messages peut être modifié à distance sur le site internet.
